# EUROPEAN PATENT APPLICATION

(11) **EP 1 524 124 A1**
(43) Date of publication of application: **20.04.2005**
(21) Application number: 03741441.4
(22) Date of filing: 17.07.2003
(51) Int. Cl.: B41J 29/38, G06F 3/12, H04N 5/76

(54) **PRINTING SYSTEM**

(30) Priority: 19.07.2002 JP 2002211450
(71) Applicant: SEIKO EPSON CORPORATION, Tokyo 160-0811 (JP)
(72) Inventor: SAKUDA, Kenji, Suwa-shi, Nagano 392-8502 (JP); ENDO, Masakatsu, Suwa-shi, Nagano 392-8502 (JP)
(74) Representative: Sturt, Clifford Mark
(86) International application number: PCT/JP2003/009066
(87) International publication number: WO 2004/009362

(57) **Abstract**

It is an object of the invention, where image file(s) are sent directly to printer(s) from digital camera(s) or other such peripheral equipment and printing of same is automatically carried out thereat, to cause reprinting to be properly carried out following printing error(s). Camera(s) 10 and printer(s) 20 support DPOF printing, it being possible to instruct printer(s) 20 to print image file(s) from camera(s) 10 without use of intervening personal computer(s) or the like. Printer(s) 20 monitor print status(es), creating job status information for object(s) (image file(s)) currently being printed and communicating same to camera(s) 10. Camera(s) 10 save job status information, overwriting as necessary such that the most recent job status information is retained. In the event that printing is resumed following interruption of printing due to paper jam(s) or the like, job status information and DPOF script file(s) are sent from camera(s) 10 to printer(s) 20. Printer(s) 20 resume printing beginning with image file(s) at which printing was interrupted.

## Description

### FIELD OF ART

The present invention pertains to a print system; e.g., a print system that sends a plurality of image files from digital camera(s) or other such host apparatus(es) to printer(s) so as to allow them to be printed thereat.

### TECHNICAL BACKGROUND

Accompanying developments in digital image technology and microcomputer systems, digital cameras and similar devices which capture images have come into widespread use. While images captured with digital cameras can be viewed using an internal display screen or an external display screen connected thereto, it is also frequently the case that printed output is generated therefrom. When printed output is to be generated from images captured with a digital camera, this might be accomplished by first transferring image file(s) from the digital camera to a personal computer and then sending same from the personal computer to a printer.

However, because carrying out printing by way of personal computer is time-consuming and represents an inconvenience to the user, direct printing, wherein image file(s) are sent directly from the digital camera to the printer and are printed, has been proposed. However, because image file(s) are exchanged between or among peripheral devices with no personal computer(s) intervening therebetween, specification of image(s) to be printed and/or number of sheets, as well as image rotation, enlargement/reduction, and various other settings, has in the case of conventional direct printing been troublesome.

In recent years, standards such as DCF (Design rule for Camera File system) and DPOF (Digital Print Order Format) have therefore been defined, making it possible for automatic direct printing to be carried out in all the more simple fashion as a result of prestorage within digital camera recording media (memory card(s) or the like) of captured image file(s) and image file print specification information.

With DPOF, because file(s) for requesting printing from printer(s) are stored on recording media in linked fashion with image file(s), a user can cause printing of desired image(s) to be carried out at specified conditions merely by establishing a direct connection between the digital camera and the printer and sending image file(s) and print specification file(s) to the printer.

However, after print request(s) have been sent from digital camera(s), because all printing processing is carried out at printer(s), there is no way for digital camera(s) to know about current print status and so forth. Accordingly, even in the event of occurrence of printing error(s), e.g., where paper jam(s) and/or out-of-ink condition(s) have occurred at printer(s) and/or where printer power cable(s) and/or data transfer cable(s) connecting printer(s) and digital camera(s) have become disconnected, there is no way for digital camera(s) to know the extent to which printing has been completed in normal fashion and/or to know whether and/or for which image file(s) printing has not yet been completed.

For this reason, in the conventional art it has been the case that, after the paper jam or other such problem has been corrected and return has been made to state(s) permitting printing, everything is printed from the beginning, including portion(s) for which printing had finished normally. Accordingly, there is wasted consumption of printing paper and/or ink, and the time spent waiting to obtain the last print(s) increases.

### DISCLOSURE OF INVENTION

The present invention was conceived in light of the foregoing problems, it being an object thereof to provide a printing system making it possible, when carrying out printing which includes a plurality of objects, to preemptively avoid wasted consumption of printing resources and to improve user-friendliness by permitting resumption of printing in units of object(s) following recovery from printing error state(s).

In order to solve one or more of the foregoing problems, a printing system associated with one aspect of the present invention comprises host apparatus(es) sending print job data containing a plurality of objects, and printer(s) carrying out printing of the plurality of objects based on print job data from host apparatus(es); and furthermore comprises first storage means, second storage means, job status monitoring means, determining means, and print resuming means.

First storage means is/are for storing print job data to be sent to printer(s). Job status monitoring means creates or create job status information for each object by monitoring operations carried out by the printer(s) in connection with printing of the plurality of objects. Second storage means is/are for storing created job status information. In the event of occurrence of one or more printing errors during printing of object(s) at printer(s), determining means determines or determine whether, after occurrence of printing error(s), printer(s) has or have recovered from printing error state(s) to state(s) permitting printing. In the event that it is determined that printer(s) has or have recovered to state(s) permitting printing, print resuming means selects or select one or more objects from among the plurality of objects based on print job data stored by first storage means and job status information stored by second storage means, and causes or cause resumption of printing of selected object(s).

As used herein, "object" refers to data admitting of treatment as a single unit for purposes of printing; corresponding, for example, to a set of image data, text data, graphic data, and/or the like. More specifically, if two images and one text region are, for example, present together on a certain page, the respective images and text region might each correspond to an "object," meaning that there would be a total of three objects present on that page.

Personal computer(s), mobile phone(s), portable information terminal(s), digital camera(s), digital video camera(s), scanning equipment, and the like may be cited as examples of host apparatus(es). Furthermore, as one preferred example, host apparatus(es) might take the form of image input apparatus(es) that capture and record image(s), first storage means might take the form of recording medium or media removably installed at image input apparatus(es), and printer(s) might take the form of serial printer(s).

In the event of occurrence of printing error state(s) caused by paper jam(s) and/or the like during printing of print job data, printing might be interrupted. Moreover, upon elimination of causes of interruption and recovery to state(s) permitting printing, print resuming means might acquire print job data and job status information; might, based on such data, select which object(s) within the print job data should next be printed; and might cause printing of selected object(s) to resume. For example, object(s) for which printing had been completed prior to interruption of printing might not be printed, and printing of objects(s) for which printing has not yet been completed might be resumed. By so doing, it will be possible to prevent wasted consumption of printing paper and/or colorant material (ink, toner, etc.).

In one embodiment, job status information may include object identification information for specifying object(s) subject to printing and information indicating number(s) of such object(s) which has or have already been printed; and print resuming means may, based on job status information and print job data, determine which object(s) has or have not yet been completely printed and may cause printing of such object(s) to resume.

In one embodiment, host apparatus(es) may be provided with the first and second storage means.

In one embodiment, first storage means and second storage means may respectively be provided at rewritable storage apparatus(es). First and second storage means may be provided at respectively different storage apparatuses, or may be provided at the same storage apparatus.

In one embodiment, first and second storage means may respectively be provided at rewritable recording medium or media removably installed at host apparatus(es). PC card(s), card-like memory apparatus(es), and the like may be cited as examples of removably installable recording medium or media. If first and second storage means are made to take the form of the same recording medium, it will be possible in the event of occurrence of abnormality or abnormalities at hosts apparatus(es) to install this recording medium at different host apparatus(es) and to connect such different host apparatus(es) to printer(s), permitting resumption of printing of object(s) for which printing has not yet been completed.

In the event that first and second storage means are provided at the same recording medium, job status information may be included within print job data. For example, print job data may include one or more image files as well as print specification file(s) specifying the manner(s) in which such image file(s) is/are to be printed, and job status information may be written to print specification file(s).

In one embodiment, print job data may include one or more image files as well as print specification file(s) specifying the manner(s) in which such image file(s) is/are to be printed; and print specification file(s) may contain, at least, job identification information for identifying print job(s), information specifying print type(s), information specifying how many sets of prints are to be printed, and path information indicating where image file(s) are stored. Moreover, object identification information for object(s) subject to printing which may be included in job status information may be made up of partial path information for image file(s) associated with such object(s). Moreover, print resuming means may, during resumption of printing, access job status information and print job data, comparison of partial path information for image file(s) for object(s) subject to printing, which may be included within job status information, and path information for image file(s), which may be included within print job data, permitting determination of which image file(s) was or were subject to printing at time(s) of occurrence of printing error(s); or in other words, permitting determination of which image file(s) to resume printing.

In one embodiment, host apparatus(es) could be image input apparatus(es) such as camera(s) that capture and record image(s), first storage means could be removably installed recording medium or media, and printer(s) could be serial printer(s).

In accordance with another aspect of the present invention, printing method(s) such as might be carried out by printing system(s) as described above is/are provided.

In accordance with yet another aspect of the present invention, host apparatus(es), printer(s), and/or computer program(s) such as might be employed at printing system(s) as described above is/are provided. Computer program(s) in accordance with the present invention may be distributed in recorded form on any of various recording media including, for example, memory or memories, hard drive(s) and/or hard disk(s) (HD), CD-ROM, DVD-RAM, and so forth; and/or may be distributed electronically via communication network(s).

### BRIEF DESCRIPTION OF DRAWINGS

FIG. 1 is a block diagram showing a schematic overview of a printing system associated with a first embodiment of the present invention.
FIG. 2 contains a diagram illustrating storage hierarchy at a recording medium.
FIG. 3 contains diagrams illustrating (a) DPOF print specification method, and (b) the structure of a DPOF script file that might be created thereby.
FIG. 4 contains diagrams illustrating specific examples of DPOF script files.
FIG. 5 contains emblematic representations showing result of printing such as might occur during normal DPOF printing.
FIG. 6 is a flowchart showing DPOF print instruction processing such as might be executed at a camera.
FIG. 7 is a flowchart showing DPOF printing processing such as might be executed at a printer.
FIG. 8 is a flowchart showing printing error monitoring processing such as might be executed at a printer.
FIG. 9 contains emblematic representations showing result of printing such as might occur when in resume printing mode.
FIG. 10 is a flowchart showing DPOF printing processing associated with a second embodiment of the present invention.
FIG. 11 contains emblematic representations showing result of printing such as might occur when in resume printing mode associated with a third embodiment of the present invention.
FIG. 12 contains a diagram illustrating a specific example of a DPOF script file associated with a fourth embodiment of the present invention.

### BEST MODE FOR CARRYING OUT INVENTION

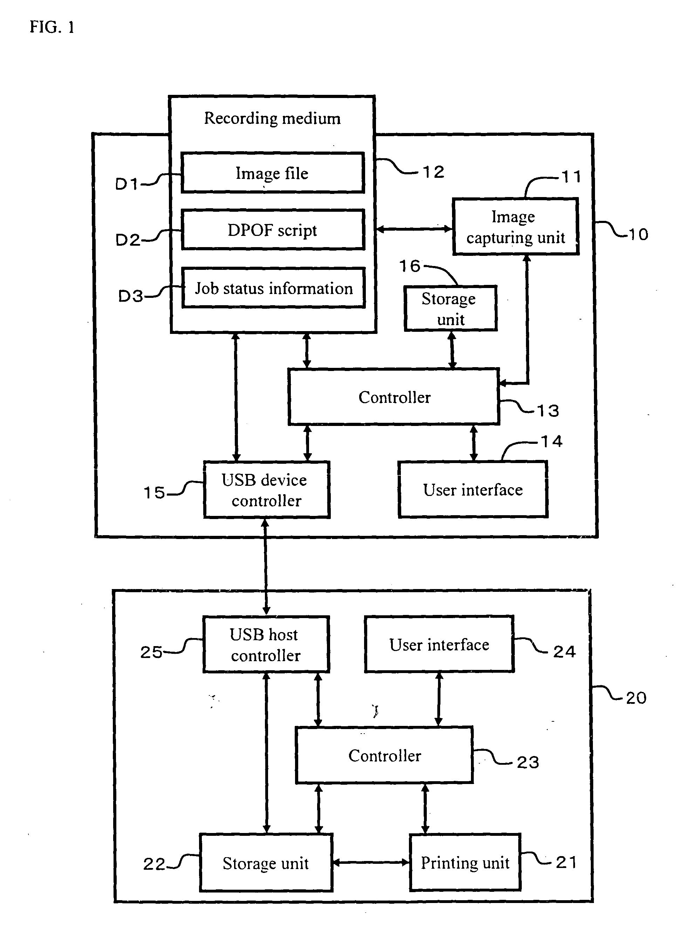

Below, referring to FIGS. 1 through 12, embodiments of the present invention are described in detail.

### 1. FIRST EMBODIMENT

First, referring to FIGS. 1 through 9, a first embodiment of the present invention will be described. FIG. 1 is a block diagram showing a schematic overview of a printing system associated with the present embodiment.

Digital camera (hereinafter abbreviated as "camera") 10 is, as will be described below, capable of capturing images and storing same as electronic data, and is capable of sending stored image data to printer 20 and causing printing to be carried out. Camera 10 supports the DPOF (Digital Print Order Format) specification. DPOF defines a specification whereby information identifying images selected by a user, the number of sheets or copies to be printed, the manner in which printing is to be carried out, and other such print specification information is saved in a text-based file (DPOF script file); sending of such print specification information to a printer at a lab or to a printer owned by the user which supports DPOF making it possible to carry out automatic printing with no personal computer intervening therebetween.

Camera 10 comprises image capturing unit 11, recording medium 12, controller 13, user interface 14, USB device controller 15, and storage unit 16. Image capturing unit 11- comprising, for example, CCD (charge-coupled device) elements, lenses, preprocessing circuitry, and so forth-converts images of photographic subjects into electronic form and outputs same.

Recording medium 12-being, for example, PC card, card-type memory (but note that there is no requirement that recording medium 12 be in the form of card(s)), or other such rewritable recording media-is removably installed at a card slot of camera 10. Recorded on recording medium 12 are file(s) D1 containing image(s) captured by user(s), DPOF script file(s) D2 for making specifications with regard to printing, and job status information D3. Note that it is also possible to adopt a constitution which is such that job status information D3 is stored at storage unit(s) 16 comprising rewritable nonvolatile memory or the like.

A microcomputer system comprising CPU(s), RAM, ROM, and so forth constitutes controller 13, which executes various programs. User interface 14-comprising, for example, liquid crystal display(s), operating switch(es), and/or the like-displays captured images and/or operation menu(s), and moreover, accepts instructions and the like from user(s). USB device controller 15 is for carrying out transfer of data with printer 20 by way of USB cable(s).

Thus, camera 10 might be connected to printer 20 by way of a USB cable, and image file(s) D1, DPOF script file(s) D2, and job status information D3 might be sent from camera 10 to printer 20, permitting printing to be carried out.

Constitution of printer 20 will be described. Printer 20 comprises printing unit 21, storage unit 22, controller 23, user interface 24, and USB host controller 25, and is configured as a serial color printer with DPOF support.

Printing unit 21 is constituted so as to include print engine(s) and engine controller(s). Printing unit 21 might, for example, create image data for printing in units of bands, prescribed printing being carried out in accordance with specified settings as a result of causing printhead(s) to scan in a paper feed direction and in a direction orthogonal thereto. Controller 23-comprising, for example, hard disk drive(s) and/or semiconductor memory device(s)-stores image file(s) and the like acquired from camera 10. User interface 24- comprising, for example, liquid crystal panel(s), operating switch(es), and/or the like-accepts instructions and the like from user(s), and also displays progress of printing and so forth. USB host controller 25 is for carrying out data communication with camera 10 via USB.

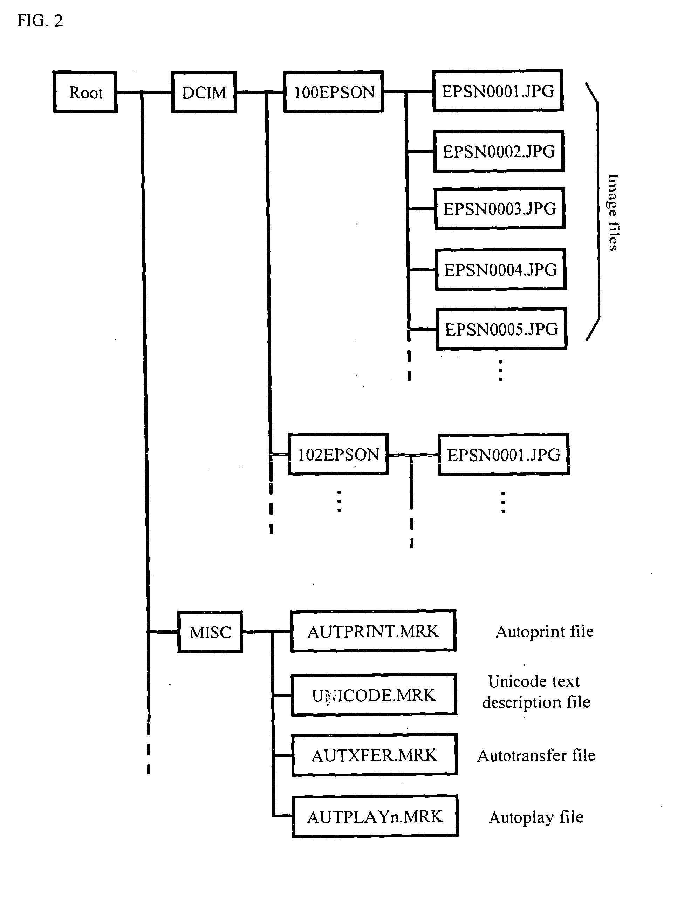

Next, referring to FIG. 2, the storage hierarchy at recording medium 12, which is removably installed at camera 10, will be described.

Formed within root directory or directories (Root) at recording medium or media 12 there might be DCF image directory or directories (DCIM) for still image(s), directory or directories (MISC) for output settings, and so forth; and formed within DCF image directory or directories there might be DCF directory or directories (100EPSON, 102EPSON, etc.) for storing image file(s). In such case, where a plurality of DCF directories are created within a DCF image directory, directory numbers for respective DCF directories are defined in advance so as to avoid repeated use of the same directory number.

Stored within each DCF directory there are one or more captured image files (EPSN0001.JPG, EPSN0002.JPG, etc.). File names of image files stored within respective DCF directories are defined so as to avoid repeated use of a file number within the same DCF directory. But note that there is no objection to repeated use of file numbers for image files across different DCF directories.

Stored within the output settings directory or directories there are autoprint file(s) (AUTPRINT.MRK), Unicode text description file(s) (UNICODE.MRK), autotransfer file(s) (AUTXFER.MRK), and autoplay file(s) (AUTPLAYn.MRK).

Autoprint file(s)-corresponding to DPOF script file(s) D2-are written in text format and contain print instruction(s) necessary for sending image file(s) from camera(s) 10 to printer(s) 20 and for causing printing to be carried out automatically. Moreover, autotransfer files may be used when transferring image(s) via the Internet or other such network, and autoplay files may be used, for example, when viewing a slide show on a projector, television display screen, or the like. Furthermore, Unicode text description files are for permitting use of Unicode so as to accommodate languages of multiple countries.

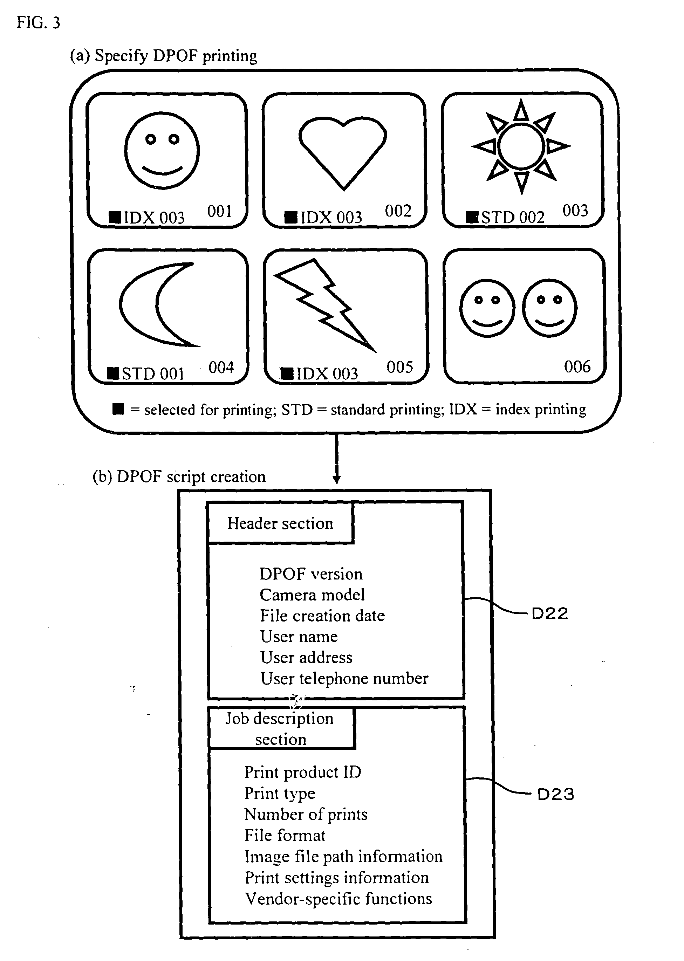

Next, referring to FIG. 3, description is carried out with respect to DPOF print specification(s) and creation of DPOF script file(s) D2.

FIG. 3 (a) is an example of a screen that might be displayed at user interface 14 of camera 10, reduced images of respective image files stored at recording medium 12 being displayed in thumbnail fashion. Where DPOF printing is to be carried out, the user selects which image file(s) are to be printed, and also specifies how many sheets or copies are to be printed for each image file, how printing is to be carried out, and so forth. At FIG. 3 (a), a black square-shaped mark is displayed at image files selected for printing. Furthermore, standard printing (STD) or index printing (IDX) may be specified as print type(s). The number next to print type indicates the number of sheets or copies to be printed.

When the user has completed making specification(s) with regard to DPOF printing, DPOF script file(s) are created as shown at FIG. 3 (b). A DPOF script file can be divided into header section(s) and job description section(s). Header section(s) contain applicable DPOF version number(s), model name(s) of camera(s) 10, DPOF script file creation date(s), and also user information such as user name(s) and/or user address(es) and telephone number(s). Job description section(s) contain print product ID(s), print type(s) (whether to carry out standard printing, index printing, etc.), number(s) of prints, file format(s), image file path information, print settings information (whether to insert date(s), whether to carry out rotation, etc.), vendor-specific function(s) uniquely definable by each camera manufacturer, and so forth. Note that each of the foregoing items may in some cases be required and in some cases be optional.

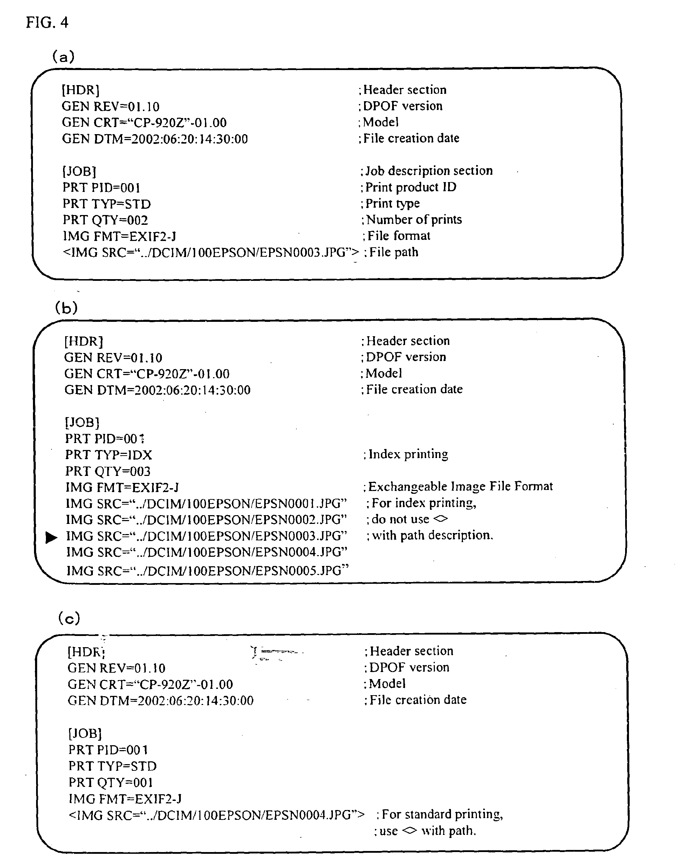

FIG. 4 contains diagrams illustrating specific examples of DPOF script files. As shown in FIG. 4, a DPOF script file comprises header section(s) [HDR] common to all print jobs, and job description section(s) [JOB] specific to each print job. As mentioned with reference to FIG. 3 (b), each job description section contains print product ID(s) identifying individual print job(s), print type(s), number(s) of prints, path information for image file(s) to be printed, and so forth; these being written in text format. Accordingly, based on DPOF script file(s), printer(s) 20 can acquire image file(s) to be printed from camera(s) 10 and can carry out printing of acquired image file(s) in accordance with specified method(s).

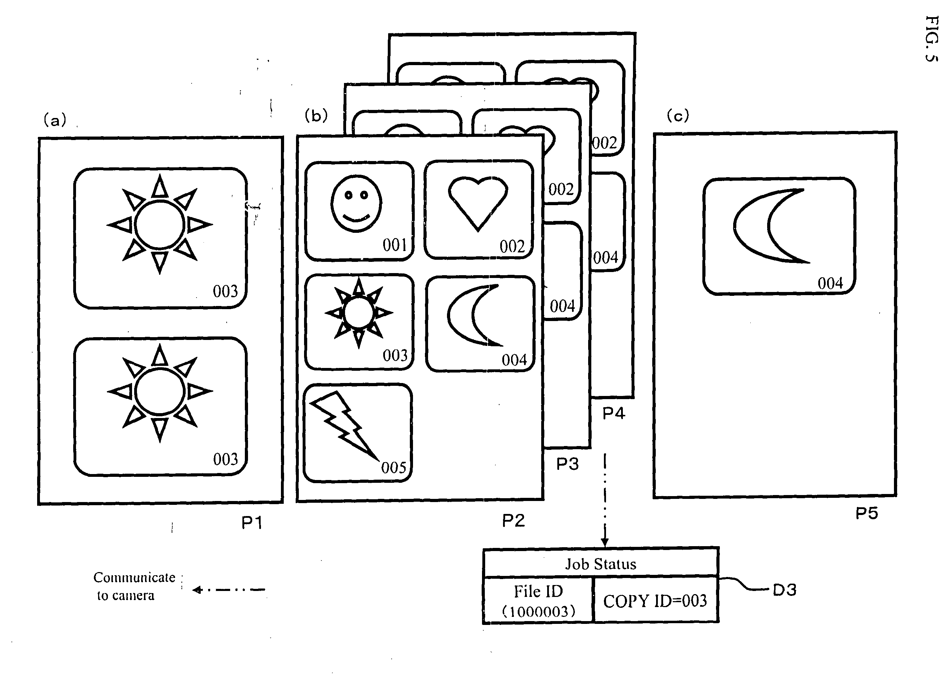

FIG. 5 contains emblematic representations showing a situation such as might exist during normal DPOF printing. The example shown at FIG. 5 indicates a situation that might result when printing is carried out in accordance with the following specifications. Moreover, where standard printing is specified, it will be assumed that as many as two items can be printed on a single sheet of printing paper.
(1) Using standard printing, print two copies of the image file "EPSN0003" stored in the directory "100EPSON";
(2) Using index printing, print three sets of the five image files "EPSN0001" through "EPSN0005";
(3) Using standard printing, print one copy of the image file "EPSN0004".

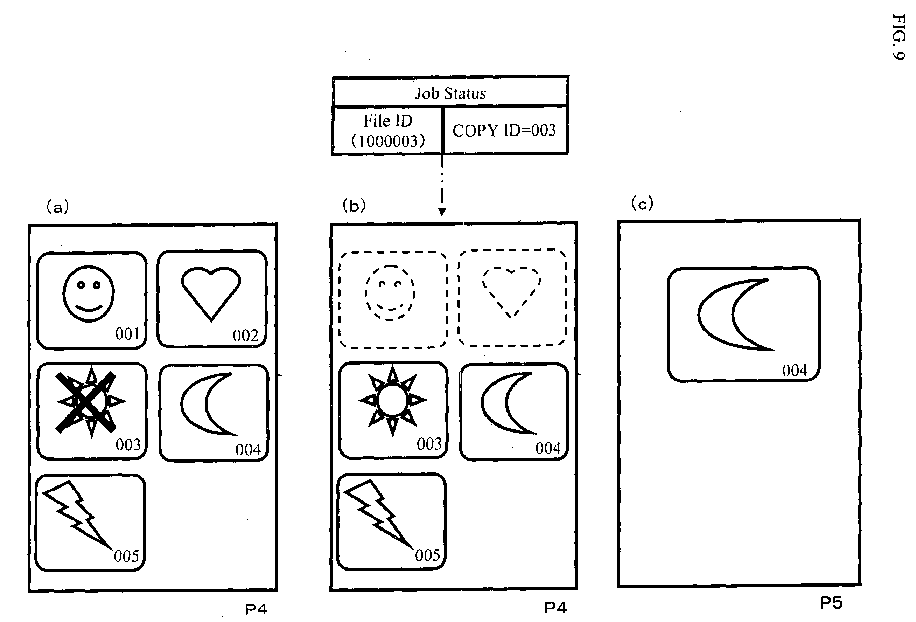

As shown in FIG. 5, two copies of the image file "EPSN0003" are printed next to each other on the first page, the image files "EPSN0001" through "EPSN0005" are respectively printed in index fashion on the second through fourth pages, and one copy of the image file "EPSN0004" is printed on the fifth, or last, page. Note that at FIG. 5, and at FIG. 9 which will be described below, file numbers of image files are for convenience represented by three digits.

Printer(s) 20 regularly monitor print status(es) at printing unit(s) 21, and create job status information D3 in units of object(s) which is communicated to camera(s) 10. Job status information is made up of information which may, for example, include print product ID(s) (PRT PID), file ID(s), and/or number(s) of item(s) which have already been printed (PRT QTY).

File ID(s), being information for identifying image file(s) currently being printed, is/are created so as to be uniquely defined based on image file path information. More specifically, a file ID might be created by concatenating the directory number of the DCF directory in which the image file is stored and the file number of the image file. As described above, DCF directory numbers are established in advance so as to avoid repeated use of directory numbers used for other DCF directories; and moreover, file numbers are established in advance so as to avoid repeated use of a file number within the same DCF directory. Accordingly, as a result of creating the file ID by concatenating the directory number and the file number, it is possible to obtain a number which has a total of seven digits, for which seven bytes of data is sufficient, permitting image file(s) stored on recording medium 12 to be uniquely identified through use of a small amount of information.

If job status information communicated from printer(s) 20 in units of object(s) is saved by camera(s) 10 to recording medium or media 12 and/or storage unit(s) 16, overwriting as necessary, it will be possible to always have the most recent information about how printing is progressing. In addition, if power cable(s) and/or USB cable(s) become disconnected and/or if printing is interrupted due to occurrence of paper jam(s), out-of-ink condition(s), and/or the like, it will be possible, by sending the most recent job status information from camera(s) 10 to printer(s) 20, to cause printing to resume from object(s) (image file(s)) which was or were being processed at the time(s) that printing was interrupted.

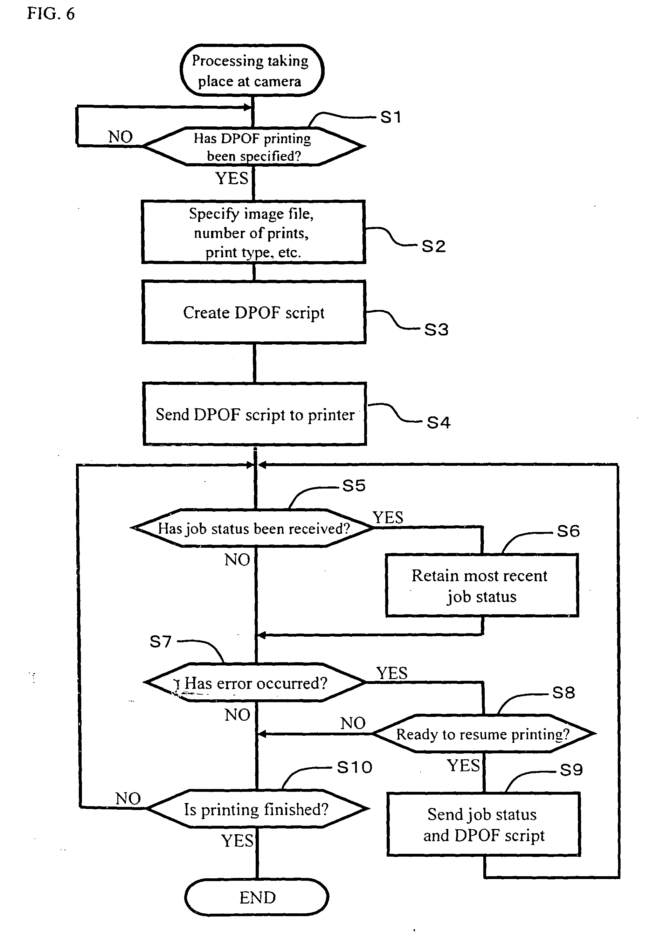

Next, referring to the respective flowcharts in FIGS. 6 through 9, printing system operation will be described. Hereinafter, "step" is abbreviated "S". Note that flowcharts shown in the drawings indicate operations in schematic fashion, and may differ from actual programming.

First, FIG. 6 shows DPOF print specification processing such as might be executed at camera 10. The user specifies DPOF printing by way of user interface 14 (S1). Upon specification of DPOF printing by the user (S1 = YES), the user respectively specifies image(s) to be printed; number(s) of prints; print type(s); and the date, caption, and/or other text to be printed together therewith (S2). DPOF script file(s) is/are created based on the manner of printing and so forth specified by the user (S3). Camera 10 sends DPOF script file(s) to printer 20 via USB cable (S4).

As described below, printer 20 begins printing as requested by camera 10 based on received DPOF script file(s); and printer 20 monitors status of printing and creates job status information, which it communicates to camera 10. Camera 10 waits for job status information to be communicated thereto from printer 20 (S5); and in the event that job status information is received, it is saved, overwriting as necessary (S6). Accordingly, camera 10 will always have only a single set of job status information, this being the most recent version thereof.

Furthermore, camera 10 carries out monitoring to determine whether printing error(s) has or have occurred at the printer (S7). Presence and/or absence of printing error(s) might be knowable, for example, based on whether communication(s) regarding occurrence of printing error(s) has or have been-communicated thereto from printer 20. Furthermore, for example, occurrence of error(s) might be inferred where printer 20 fails to provide some kind of response before passage of prescribed amount(s) of time.

In the event that no printing error has occurred (S7 = NO), determination is made as to whether DPOF printing has been completed (S10), the processing steps from S7 to S10 being repeated until all printing has been completed. On the other hand, in the event that it is determined that printing error(s) has or have occurred (S7 = YES), response from printer 20 regarding whether preparations to resume printing have been completed is awaited (S8); and in the event that preparations to resume printing have been completed (S8 = YES), saved versions of the most recent job status information and DPOF script file(s) are sent to printer 20 (S9), and printing is caused to be resumed.

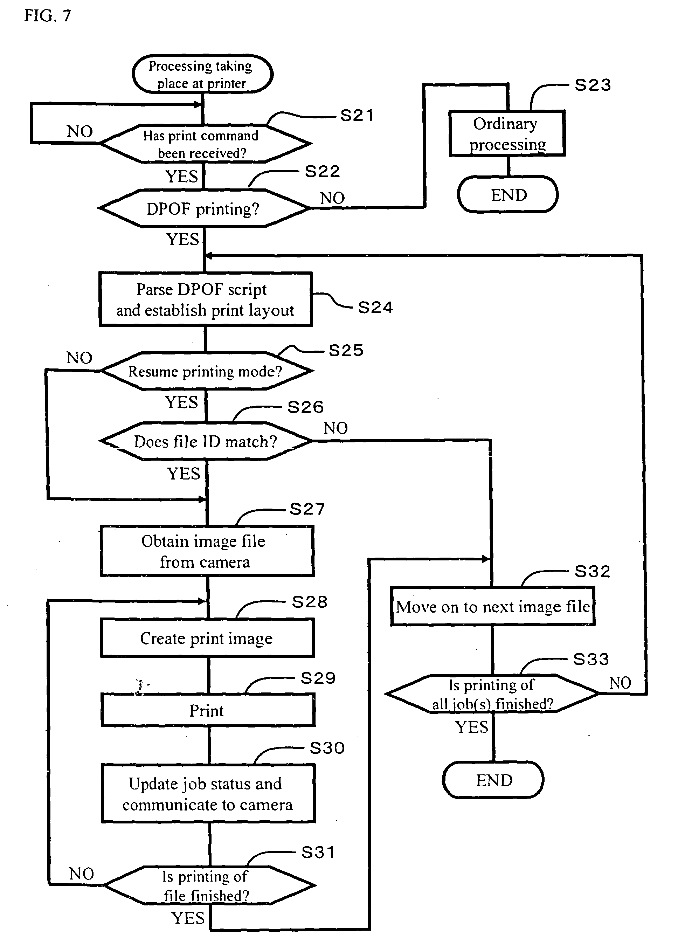

Next, FIG. 7 shows DPOF printing processing such as might be executed at printer 20. Printer 20 carries out monitoring to determine whether print command(s) has or have been entered from external equipment (S21); and in the event that print command(s) is/are received (S21 = YES), determination is made as to whether such print command(s) is/are request(s) for DPOF printing, i.e., whether DPOF script file(s) has or have been received (S22). In the event that such command(s) is/are not DPOF printing command(s), ordinary processing is carried out in correspondence to such command(s) (S23). For example, where a print request is received from a personal computer, ordinary printing processing would be carried out.

In the event that such command(s) is/are for DPOF printing (S22 = YES), DPOF script file(s) is/are parsed and print layout(s) is/are set (S24). Next, determination is made as to whether operations are being carried out pursuant to resume printing mode following recovery from printing error(s) (S25). In the event that operations are being carried out pursuant to normal printing mode, no printing error having yet occurred (S25 = NO), image file(s) specified at job description section(s) of DPOF script file(s) is/are obtained from recording medium or media 12 (S27). Moreover, printer-ready image(s) is/are created (S28), and printing is begun (S29).

In the event that printing of new image file(s) is begun, job status information is updated and the updated job status information is communicated to camera 10 (S30). The processing steps at S28 through S30 are repeated until printing of image file(s) is completed (S31). In the present embodiment, because serial printer is/are employed, printer-ready image(s) is/are sequentially formed one band at a time, with printing being carried out in increments of a single pass or of multiple passes. In the event that the specified image file(s) has or have been printed the specified number of times (S31 = YES), processing proceeds to any image file(s) to be printed subsequent thereto (S32), and determination is carried out with regard to whether all print job(s) has or have been printed (S33). The foregoing processing is repeated until all print job(s) has or have been printed.

Accordingly, with each new image file or set of image files that is printed, job status information is updated and the updated job status information is communicated to camera 10 and is saved thereat.

On the other hand, in the event that preparations to resume printing have been completed following occurrence of printing error(s) and DPOF script(s) and job status information have again been sent from camera 10 to printer 20, it is determined that operations are being carried out pursuant to resume printing mode (S25 = YES). In resume printing mode, DPOF script(s) is/are parsed, reading of DPOF script file(s) being advanced to print job(s) referencing image file(s) possessing file ID(s) matching file ID(s) indicated in the most recent job status information received from camera 10, and printing is resumed starting with the image file(s) having the matching file ID(s) (S26). In other words, printing is resumed beginning with image file(s) which was or were being printed when printing was interrupted due to printing error(s).

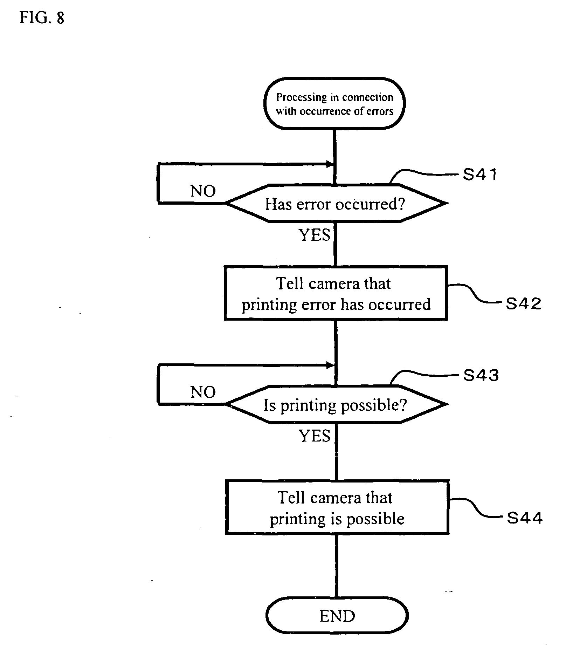

Next, FIG. 8 shows error processing such as might be executed at printer 20. Printer 20 carries out monitoring to determine whether printing error(s) has or have occurred based on response signal(s) from printing unit 21, changes in voltage at I/O port(s), and/or the like (S41); and in the event that printing error(s) has or have occurred, such fact is communicated to camera 10 (S42). And with regard to error(s) which cannot be detected by the printer, e.g., unanticipated power outage(s), disruption in communication channel(s), and/or the like, determination as to presence and/or absence of printing error(s) is accomplished at the camera by means of timeout processing or the like as was described above. In the event that the paper jam(s), out-of-ink condition(s), and/or other such cause(s) of interruption is/are corrected and preparations to resume printing have been completed (S43), the fact that the printer is ready to print is communicated to camera 10 (S44).

Thus, when the paper jam or other such printing error has been eliminated at the printer, communication of such fact is sent from the printer to camera 10 or other such host apparatus(es). After receiving such communication, the host apparatus, responsive to manual operation(s) carried out by user(s) or automatically (i.e., without the need for any manual operation on the part of the user), may request that printer 20 automatically resume printing starting with any unprinted page(s).

Alternatively or in addition thereto, where printing error(s) has or have occurred due to reason(s) attributable to printer(s) (e.g., paper jam or the like), information for image file(s) currently being printed might be caused to be stored at host apparatus(es) as job status information; or conversely, where printing error(s) has or have occurred due to reason(s) attributable to host apparatus(es) (e.g., low battery level(s) at camera(s) 10), information for image file(s) currently being printed might be caused to be stored at printer(s) 20 as job status information. Moreover, in the latter case, when cause(s) of error(s) at host apparatus(es) has or have been eliminated (e.g., battery or batteries at camera(s) 10 have been recharged to adequate level(s)) and it is possible to resume printing, job status information stored at printer(s) 20 might be sent to host apparatus(es). After receiving such job status information from printer(s) 20, host apparatus(es) might request that printer(s) 20 automatically resume printing starting with any unprinted page(s).

FIG. 9 contains emblematic representations showing printed output such as might exist when resuming printing. Consider an example in which a printing error occurs during printing of the image file "EPSN0003" during printing of the third set being printed in index fashion. Because the image file that was being printed when printing was interrupted is the image file having file name "EPSN0003" which is saved in the DCF directory "EPSON 100", the file ID thereof is "1000003", this being formed by concatenation of the directory number "100" and the file number "0003".

The job status information sent from camera 10 contains description to the effect that "at the second print job (PRT PID = 002), printing of the third set (PRT QTY = 3) of the image file identified as file ID "1000003" was in progress''. Accordingly, printer 20 jumps to the line of the DPOF script file indicated by the triangular black mark in FIG. 4 (requiring parsing of text code but not requiring creation of print image(s)), and printing is resumed starting with the image file which was being printed when printing was interrupted.

FIG. 9 (a) shows the fourth page as it would be printed during normal printing; FIG. 9 (b) shows the fourth page as it would be printed in resume printing mode. Note that whereas at FIG. 9 (b) the paper has been advanced by an amount corresponding to image files "EPSN0001" and "EPSN0002" for which printing had already been completed, creating a margin-like region at the top thereof, this has only been done for convenience of description, there being no need to create spurious margin-like region(s) thereabove.

In accordance with the present embodiment which is constituted in such fashion, it is possible for camera(s) to ascertain most-recent printing status(es) even in the context of DPOF printing in which image data is sent directly from peripheral equipment to printer(s) and printing is caused to be automatically carried out. Accordingly, where printing is interrupted, it is possible to cause printing to resume starting with interrupted object(s), making it possible to prevent wasted consumption of printing paper, ink, and so forth. Furthermore, because portion(s) which has or have already been printed are not printed, it is possible to decrease the time which the user spends waiting to obtain the final printed output.

Furthermore, where job status information is saved at camera(s) 10, this will make it possible, in the event that printing error state(s) at printer(s) 20 last for long period(s) of time, to resume printing of any remaining portion(s) simply by connecting camera(s) 10 instead to different printer(s) of identical or similar type. Accordingly, this will be especially effective at printing labs or other such facilities equipped with a plurality of printers of similar type.

In addition, where job status information is made up of the minimum amount of information required for resumption of printing and/or where file IDs are created from partial image file path information so as to reduce data size and/or where only the most recent job status information is retained, this will make it possible reduce any burden associated with retention of job status(es) by camera(s).

Furthermore, in the present embodiment, because not only image file(s) and DPOF script(s) but also job status information is stored at recording medium or media 12, even where there is failure of camera(s) 10 or the like during interruption of printing, it is possible by installing recording medium or media 12 at different camera(s) of the same type to cause printing to be resumed beginning with interrupted image file(s).

### 2. SECOND EMBODIMENT

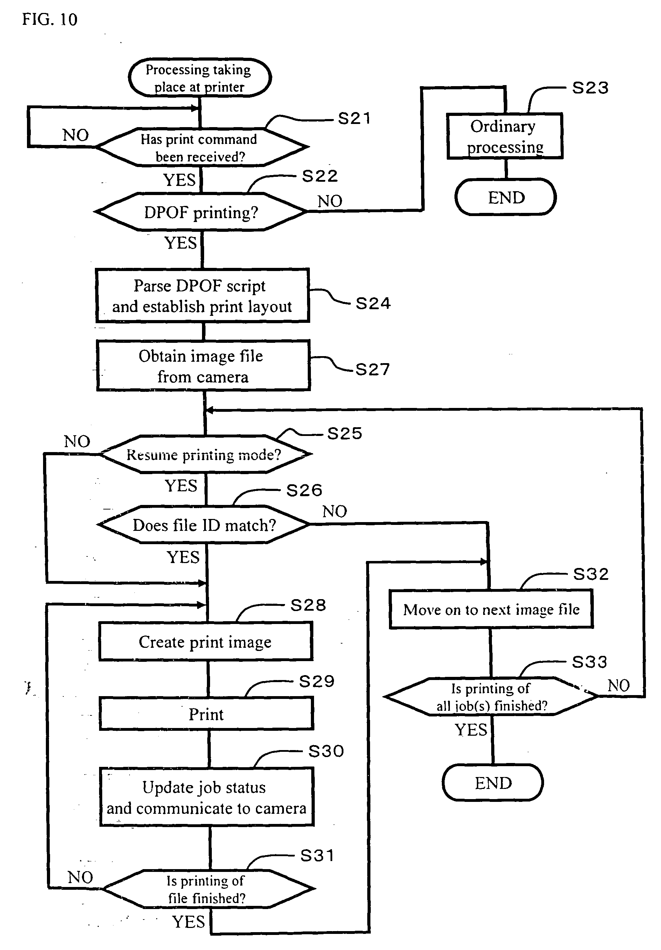

Next, FIG. 10 is a flowchart showing DPOF printing processing taking place at a printer, this being associated with a second embodiment of the present invention.

Characteristic of the present embodiment is the fact that image file(s) subject to printing is/are first saved at storage unit(s) 22 of printer(s) 20. That is, upon specification of DPOF printing (S22 = YES), printer(s) 20 get all image file(s) specified in DPOF script file(s) and save same to storage unit(s) 22 (S27).

### 3. THIRD EMBODIMENT

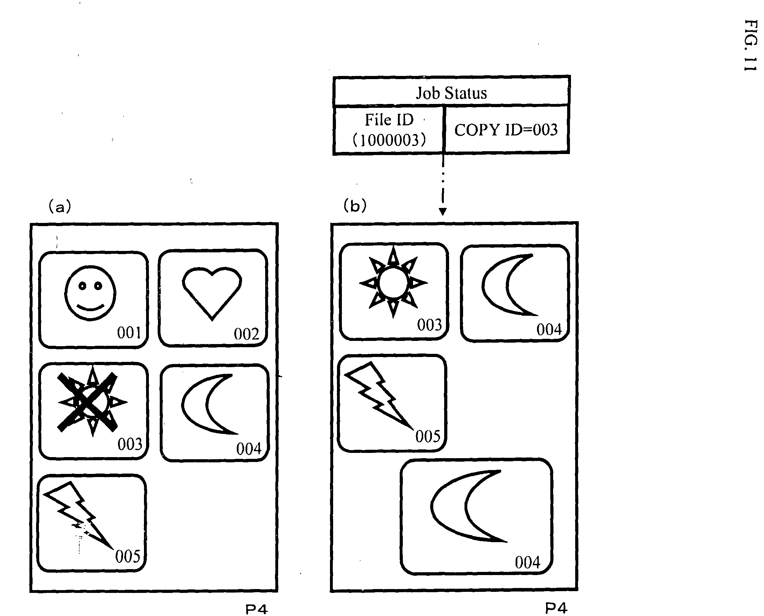

FIG. 11 shows printing such as might occur during resumption of printing in accordance with a third embodiment. In the present embodiment, setting of layout(s) is redone when in resume printing mode so as to prevent occurrence of wasteful margin-like spaces.

### 4. FOURTH EMBODIMENT

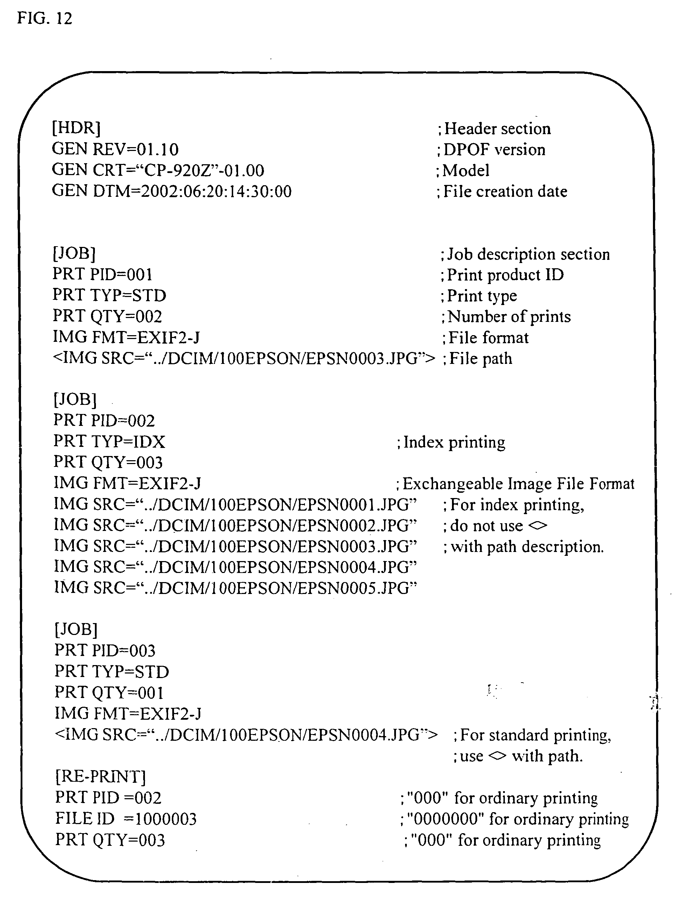

FIG. 12 shows a DPOF script file associated with a fourth embodiment. In the present embodiment, the DPOF script file contains description of job status information as indicated at "RE-PRINT". Moreover, during ordinary printing, by setting the values of the various parameters present in the job status information to "000" it is possible to declare that this is ordinary printing.

Alternatively or in addition thereto, even at the foregoing respective embodiments in which job status information and DPOF script file(s) are created respectively separately but in mutually associated fashion, it is possible during ordinary printing to inform printer(s) of the fact that ordinary printing is being carried out by setting value(s) of parameter(s) in job status information to special code(s) (e.g., "000" or the like). By so doing, data sent from camera(s) 10 to printer(s) 20 may employ common type(s) and structure(s) regardless of whether processing is being carried out pursuant to normal printing mode or resume printing mode, permitting simplification of program structure.

Moreover, the foregoing embodiments of the present invention have been presented as examples for purposes of describing the present invention and without intent to limit the scope of the present invention to those embodiments alone. One of ordinary skill in the art will be able to carry out the present invention in the context of a wide variety of other embodiments without departing from the essence of the present invention.

For example, camera(s) 10 and printer(s) 20 need not be connected via USB. For example, data communication may be carried out via IEEE 1394 interface, wireless LAN, infrared, and so forth.

## Claims

1. In the context of a printing system comprising one or more host apparatuses sending print job data containing a plurality of objects; and one or more printers carrying out printing of the plurality of objects based on the print job data from host apparatus or apparatuses, a printing system comprising:
one or more first storage means for storing the print job data;
one or more job status monitoring means for creating job status information for each one of the objects by monitoring operations carried out by the printer or printers in connection with printing of the plurality of objects;
one or more second storage means for storing the created job status information;
one or more determining means for, in the event of occurrence of one or more printing errors during printing of the plurality of objects at the printer or printers, determining whether after occurrence of the printing error or errors the printer or printers has or have recovered from one or more printing error states to one or more states permitting printing; and
one or more print resuming means for, in the event that it is determined that the printer or printers has or have recovered to the state or states permitting printing, selecting one or more objects from among the plurality of objects based on the print job data stored at the first storage means and the job status information stored at the second storage means, and causing resumption of printing of the selected object or objects.

2. A printing method comprising:
one or more steps in which print job data containing a plurality of objects is sent from one or more host apparatuses to one or more printers;
one or more steps in which printing of the plurality of objects is carried out at one or more printers based on the print job data from host apparatus or apparatuses;
one or more steps in which the print job data is stored;
one or more steps in which operations carried out by the printer or printers in connection with printing of the plurality of objects are monitored and job status information is created for each one of the objects;
one or more steps in which the created job status information is stored;
one or more steps in which, in the event of occurrence of one or more printing errors during printing of the plurality of objects at the printer or printers, determination is made as to whether after occurrence of the printing error or errors the printer or printers has or have recovered from one or more printing error states to one or more states permitting printing; and
one or more steps in which, in the event that it is determined that the printer or printers has or have recovered to the state or states permitting printing, one or more objects is or are selected from among the plurality of objects based on the stored print job data and the stored job status information, and printing of the selected object or objects is resumed.

3. A printing method according to claim 2 wherein, at the step or steps in which printing is resumed, in the event that it is determined that the printer or printers has or have recovered to the state or states permitting printing, printing of the selected object or objects is automatically resumed.

4. A printing method according to claim 2 wherein:
the job status information includes object identification information for specifying one or more objects subject to printing and information indicating one or more numbers of the object or objects subject to printing which has or have already been printed; and
at the step or steps in which printing is resumed, one or more objects for which printing has not yet been completed is or are selected based on the job status information and the print job data, and printing of the object or objects for which printing has not yet been completed is resumed.

5. A printing method according to claim 2 wherein the step or steps in which the print job data is stored and the step or steps in which the job status information is stored are carried out by the host apparatus or apparatuses.

6. A printing method according to claim 5 wherein the print job data and the job status information are stored on one or more rewritable recording media removably installed at the host apparatus or apparatuses.

7. A printing method according to claim 5 wherein:
the print job data includes one or more image files, and one or more print specification files specifying one or more manners of printing the image file or files; and
at the step or steps in which the job status information is stored, the job status information is recorded in the print specification file or files.

8. A printing method according to claim 5 further comprising:
one or more steps in which the stored job status information is retained by the host apparatus or apparatuses at least until printing of the print job data is completed; and
one or more steps in which, in the event that it is determined that the printer or printers has or have recovered to the state or states permitting printing, the print job status information and the print job data stored by the host apparatus or apparatuses are sent from the host apparatus or apparatuses to the printer or printers;
wherein, at the step or steps in which printing is resumed, the printer or printers select one or more objects for which printing has not yet been completed from among the plurality of objects based on the job status information and the print job data from the host apparatus or apparatuses, and resume printing of the object or objects for which printing has not yet been completed.

9. A printing method according to claim 5 wherein:
in the event that the printing error or errors occur due to one or more reasons attributable to the host apparatus or apparatuses, the step or steps in which job status information is stored is or are carried out by the printer or printers; and
the printing method further comprises one or more steps in which, in the event that the reason or reasons attributable to the host apparatus or apparatuses has or have been corrected and it is determined that the printer or printers has or have returned to one or more states permitting printing, the job status information stored by the printer or printers is sent from the printer or printers to the host apparatus or apparatuses.

10. A printing method according to claim 4 wherein:
the print job data includes one or more image files, and one or more print specification files specifying one or more manners of printing the image file or files;
the print specification file or files contains or contain information specifying how many sets of prints are to be printed, and path information indicating where the image file or files are stored; and
the object identification information included in the job status information is made up of one or more portions of the path information for the image file or files which is or are associated with the object or objects subject to printing.

11. A host apparatus sending print job data containing a plurality of objects to one or more printers and causing printing to be carried out, the host apparatus comprising:
one or more first storage means for storing the print job data;
one or more second storage means for storing job status information for each one of the objects, the job status information being created based on operations carried out by the printer or printers in connection with printing of the plurality of objects;
one or more determining means for, in the event of occurrence of one or more printing errors during printing of the plurality of objects at the printer or printers, determining whether after occurrence of the printing error or errors the printer or printers has or have recovered from one or more printing error states to one or more states permitting printing; and
one or more resumption instruction means for, in the event that it is determined that the printer or printers has or have recovered to the state or states permitting printing, controlling the printer or printers so as to cause resumption of printing of one or more objects selected from among the plurality of objects based on the print job data and the job status information, this having been permitted as a result of sending of the print job data stored at the first storage means and the job status information stored at the second storage means to the printer or printers.

12. A printer receiving print job data containing a plurality of objects from one or more host apparatuses and carrying out printing thereof, the printer comprising:
one or more job status monitoring means for creating job status information for each one of the objects by monitoring operations carried out by the printer or printers in connection with printing of the plurality of objects, and for sending the created job status information to the host apparatus or apparatuses;
one or more determining means for, in the event of occurrence of one or more printing errors during printing of the plurality of objects, determining whether after occurrence of the printing error or errors the printer or printers has or have recovered from one or more printing error states to one or more states permitting printing; and
one or more print resuming means for, in the event that it is determined that the printer or printers has or have recovered to the state or states permitting printing, receiving the print job data and the job status information from the host apparatus or apparatuses, selecting one or more objects from among the plurality of objects based on the print job data and the job status information, and resuming printing of the selected object or objects.

13. A computer program for causing one or more computers to execute a method in which print job data containing a plurality of objects is sent to one or more printers and printing is caused to be carried out, the method comprising:
one or more steps in which the print job data is stored;
one or more steps in which job status information for each one of the objects is stored, the job status information being created based on operations carried out by the printer or printers in connection with printing of the plurality of objects;
one or more steps in which, in the event of occurrence of one or more printing errors during printing of the plurality of objects at the printer or printers, determination is made as to whether after occurrence of the printing error or errors the printer or printers has or have recovered from one or more printing error states to one or more states permitting printing; and
one or more steps in which, in the event that it is determined that the printer or printers has or have recovered to the state or states permitting printing, the printer or printers is or are controlled so as to cause resumption of printing of one or more objects selected from among the plurality of objects based on the print job data and the job status information, this having been permitted as a result of sending of the stored print job data and the stored job status information to the printer or printers.
